(19) **Europäisches Patentamt / European Patent Office / Office européen des brevets**

(11) **EP 3 822 560 B1**

(12) # EUROPÄISCHE PATENTSCHRIFT

(45) Veröffentlichungstag und Bekanntmachung des Hinweises auf die Patenterteilung:
**13.12.2023   Patentblatt 2023/50**

(21) Anmeldenummer: **19209724.4**

(22) Anmeldetag: **18.11.2019**

(51) Internationale Patentklassifikation (IPC):
**G01F 1/661** *(2022.01)*      **F25B 31/00** *(2006.01)*
**F04B 39/02** *(2006.01)*      **G01F 1/74** *(2006.01)*
**G01F 1/66** *(2022.01)*      **F04C 29/02** *(2006.01)*
**F04C 15/00** *(2006.01)*      **F04C 18/00** *(2006.01)*
**G01N 21/84** *(2006.01)*

(52) Gemeinsame Patentklassifikation (CPC):
**F25B 31/004; F04B 39/0207; F04C 29/021;**
**G01F 1/661; G01F 1/74;** F04C 18/00;
F04C 2270/00; F25B 2500/16; F25B 2700/03;
G01N 21/8422

(54) **OPTISCHE MESSUNG EINER ÖLMASSENFLUSSRATE**

OPTICAL MEASUREMENT OF OIL MASS FLOW RATE

MESURE OPTIQUE D'UN FLUX MASSIQUE D'HUILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.05.2021   Patentblatt 2021/20**

(73) Patentinhaber:
• **Audi AG**
  **85045 Ingolstadt (DE)**
• **Kompetenzzentrum - Das virtuelle Fahrzeug Forschungsgesellschaft mbH**
  **8010 Graz (AT)**

(72) Erfinder:
• **SIMON, Walter**
  **01187 Dresden (DE)**

• **THALMEIR, Andreas**
  **85296 Rohrbach (DE)**
• **REBINGER, Christian**
  **80807 München (DE)**
• **LECHNER, Bernhard**
  **8042 Graz (AT)**

(74) Vertreter: **RDL Patentanwälte PartG mbB**
**Senefelderstrasse 26**
**70176 Stuttgart (DE)**

(56) Entgegenhaltungen:
CN-A- 103 424 406    DE-A1-102006 000 690
JP-A- H09 264 769    US-A1- 2018 088 054

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 822 560 B1

**Beschreibung**

Die vorliegende Erfindung betrifft ein Verfahren und eine Vorrichtung zur optischen Messung einer Ölzirkulationsrate (OCR) in einem Kältekreis.

Zur Schmierung des Kompressors eines Kältekreises wird Öl benötigt. Da Öl im Kältekreis den Wirkungsgrad verringert, versucht man die Ölkonzentration möglichst klein zu halten. Wird die Ölkonzentration jedoch zu klein, kann ein Versagen des Kompressors die Folge sein. Daher ist es wichtig, eine zuverlässige Methode zur Messung der Ölkonzentration zur Verfügung zu haben, insbesondere für eine Messung vor und nach dem Kompressor. Bislang ist eine Messung nur in Bereichen möglich, in denen flüssiges Kältemittel und Öl homogen durchmischt sind.

Aus der DE 10 2006 000 690 A1 ist eine Vorrichtung zur Kontrolle eines Schmierstoffanteils in einem Kältemittel bekannt. Die Vorrichtung, umfasst eine Zuleitung zur Zuführung eines Gemisches aus einem Schmierstoff und dem Kältemittel zu der Vorrichtung, ein der Zuleitung nachgeordnetes Trennmittel zur Trennung von Schmierstoff und Kältemittel, und ein dem Trennmittel bezüglich des abgetrennten Schmiermittelstroms nachgeordneter Einspeisepunkt zur Zuführung von abgetrenntem Schmierstoff, wobei der Schmierstoff über den Einspeisepunkt in den Kältemittelstrom einbringbar ist, wobei bezüglich des Kältemittelstroms keine Komponenten der Kälteanlage zwischen der Zuleitung und dem Einspeisepunkt angeordnet sind.

Eine Ermittlung des für die Eigenschaften des Kältekreises maßgeblichen Öl-Massenstromanteils (OCR, Oil Circulation Rate) im Kältemittel $CO_2$ erfolgt dabei in folgenden Schritten:

a. Bestimmung der (unkorrigierten) Messgrößen Druck, Temperatur, Massenstrom des Gases und Massenstrom des abgetrennten flüssigen Anteils;
b. Ermittlung des aktuellen Abscheidegrads des Trennmittels, der im Wesentlichen eine Funktion von Druck, Temperatur und Massenstrom des Gases ist, aus dem vorbekannten Kennfeld;
c. Berechnung des realen Flüssigkeitsstroms,
d. Berechnung der Korrekturfaktoren aus den Phasendiagrammen für die Schmierstoff-Kältemittelpaarung. Die Korrekturfaktoren sind im Allgemeinen Funktionen Druck, Temperatur und Massenstrom des Gases;
e. Berechnung des realen Schmierstoffmassenstroms;
f. Berechnung des Öl-Massenstromanteils.

Es findet somit eine nur mittelbare Messung des Schmierstoff- bzw. Ölmassenstroms statt, unter Verwendung von bekannten Systemdaten (Phasendiagramm, Trennmittel-Kennfeld).

Die JP 09 264 769 A offenbart eine Vorrichtung zum Messen der Menge an Schmiermittel, die durch Umwälzen in einem Kühlkreislauf zu einem Kompressor zurückgeführt wird. In einem Kühlkreislauf wird das Kältemittel unmittelbar vor einem Kompressor gasförmig, der Schmierstoff fließt teilweise in flüssigem Zustand an der Rohrwand entlang und wird teilweise als Nebel zu gasförmigem Kältemittel befördert. Das Schmiermittel wird in den flüssigen Anteil und den Nebelteil getrennt, der Schmiermittelstrom wird zu Flüssigkeitströpfchen gemacht. Die Anzahl der Tröpfchen pro Zeiteinheit wird gemessen, um die Menge des flüssigen Anteils zu messen, und die Menge des Nebelanteils wird durch ein Lichtstreuverfahren gemessen.

Die JP 2009 133 524 A betrifft eine Vorrichtung zum Messen der Ölzirkulationsrate in einem Wärmepumpensystem. Die Messvorrichtung umfasst: einen Durchflussmessabschnitt, der an der stromabwärtigen Seite eines Gaskühlers ausgebildet ist, um den Massenstrom des Kältemittels zu messen, in das das Öl eingemischt ist; einen Ölmengenmessabschnitt, der stromabwärts eines Verdampfers ausgebildet ist, um die Ölmenge zu messen, die von dem Verdampfer in das Kältemittel gemischt wird; und eine Recheneinheit zum Berechnen der Zirkulationsrate von Öl aus dem Verhältnis des Massenstroms von Öl, der von dem Ölmengen-Messteil gemessen wird, zu dem Massenstrom des Kältemittels, in das das Öl eingemischt wird, der durch die Durchflussmessung gemessen wird. Es wird die Bestimmung der Anzahl und Größe von Öltöpfchen in einem Schauglas durch optische Methoden beschrieben.

Aus der DE 10 2016 002 113 A1 geht ein Verfahren zur Bestimmung der Ölumlaufrate OCR eines Kältemittel-Ölgemisches in einem Kältemittel-Kreislauf einer Fahrzeugklimaanlage hervor, bei welchem der Druck und die Temperatur des flüssigen und gesättigten Kältemittel-Ölgemisches mittels eines Druck-Temperatur-Sensors gemessen wird, und mit dem gemessenen Druck- und Temperaturwert aus einem Kennlinienfeld mittels einer Recheneinheit der Ölmassenanteil als Ölumlaufrate OCR des Kältemittel-Ölgemisches bestimmt wird. Falls das Kältemittel-Ölgemisch nicht in einem einphasigen und flüssiggesättigten Zustand vorliegt, werden durch Messung von Druck- und Temperaturwerten sowohl vor als auch nach einem Expansionsorgan der Dampfgehalt und hieraus der flüssige Anteil des Kältemittels bestimmt. Zusammen mit dem Ölmassenanteil ergibt sich hieraus die Ölumlaufrate OCR.

Die US 2018/088054 A1 offenbart eine Vorrichtung zum Erfassen des Vorhandenseins von Flüssigkeit in einer Hochdruckgasleitung. Die Vorrichtung umfasst ein Schauglas, das ein Fenster in das Innere der Rohrleitung bereitstellt, und einen Lichtsensor zum Empfangen und Erfassen von reflektiertem Licht von der Innenseite der Rohrleitung durch das Schauglas, sowie einen Prozessor zum automatischen Erfassen des Vorhandenseins einer Flüssigkeit basierend auf dem erfassten reflektierten Licht.

Die CN 103 424 406 A beschreibt eine Vorrichtung und ein Verfahren für die Messung eines zweiphasigen Gas- und Flüssigkeitsstroms in einer Rohrleitung über ein bildgebendes Verfahren. Das Verfahren umfasst das Verwenden einer Lichtquelle zum Beleuchten eines zu messenden Tropfens durch eine transparente Rohrleitung oder ein Fenster, Verwenden einer Laserlichtquelle zur Beleuchtung des Flüssigkeitsfilmspiegels; Verwenden einer telezentrischen Linse und eines CCD- oder CMOS-Bildsensors, um einen Flüssigkeitstropfen oder Flüssigkeitsfilm in einem zu messenden Bereich abzubilden, Vergleichen des Unschärferadius eines einzelnen Tropfenbildes außerhalb des Brennpunkts mit der zulässigen Größe des Zerstreuungskreises des Messsystems, um Tropfenbilder aus einem Tiefenbereich der Kameraobjektivfokus zu entfernen, Bearbeiten eines Bildes eines beweglichen Tropfens im Tiefenfokusbereich um die Größe, die Geschwindigkeit und die Richtung des Tropfens zu ermitteln, statistische Auswertung einer Vielzahl von Tropfen, um die Teilchengrößenverteilung, die Geschwindigkeitsverteilung, die durchschnittliche Volumenkonzentration in einem statistischen Zeitraum und den durchschnittlichen Volumenstrom in der zu messenden Zone zu erhalten, und Bestimmen der Dicke des Flüssigkeitsfilms als Abstand zwischen dem Flüssigkeitsfilmspiegel und der Rohrleitungswand.

Vor diesem Hintergrund hat sich die Erfindung die Aufgabe gestellt, ein Verfahren und eine Vorrichtung zur Verfügung zu stellen, mit denen sich eine Ölumlaufrate in einem Kältekreis, beispielsweise einem Kältekreis eines Kraftfahrzeugs, im zweiphasigen Kältemittel-Öl-Gemisch messen lässt, insbesondere auch auf der Saugseite des Kompressors unmittelbar vor dem Kompressor sowie auf der Hochdruckseite des Kompressors unmittelbar nach dem Kompressor und vor Kondensatoreintritt.

Die Aufgabe wird erfindungsgemäß gelöst durch eine Vorrichtung mit den Merkmalen des Anspruchs 1 und ein Verfahren mit der Merkmalen des Anspruchs 5. Ausgestaltungen und Weiterbildungen der Erfindung ergeben sich aus den abhängigen Ansprüchen und der Beschreibung.

Im erfindungsgemäßen Verfahren wird eine Ölmassenflussrate auf der Saugseite des Kompressors, im zweiphasigen Kältemittel-Öl-Gemisch des Kältemittels, ermittelt, indem Messungen mittels Laserlichtschnitt und Stroboskopie sowie Erfassung mit einer Kamera durchgeführt werden. Es lassen sich Geschwindigkeit, Anzahl und Größe von Öltröpfchen sowie Fläche, Dicke und Geschwindigkeit eines Ölfilms auf der Innenwand einer Kältemittel-Zuleitung des Kompressors messen. Dabei werden die ursprüngliche Strömungsformen im System beibehalten und die Sensoren können gleichzeitig die Öltröpfchen/Ölnebel und den Ölwandfilm optisch bestimmen. Eine Abtrennung des Öls vom Kältemittel oder eine Trennung der Ölströmungsformen untereinander ist nicht notwendig. Die Methode wird auch nicht durch Kältemittelnebel beeinflusst. Die optische Auswertung ermöglicht eine Einstellung der Parameter, bei der nur Öltröpfchen ab einer gewissen Größe detektiert und in die Messauswertung mit aufgenommen werden.

Gegenstand der Erfindung ist ein Verfahren zur Ermittlung einer Ölmassenflussrate in einem Kältekreis, beispielsweise einem Kältekreis eines Kraftfahrzeugs, mit Hilfe einer erfindungsgemäßen Vorrichtung, umfassend Messungen der folgenden Parameter in einem zweiphasigen Kältemittel-Öl-Gemisch eines in dem Kältekreis zirkulierenden ölhaltigen Kältemittels am Eingang (auf der Saugseite) oder am Ausgang (auf der Hochdruckseite vor Kondensatoreintritt) eines Kompressors des Kältekreises:

> i. einer Anzahl von Öltröpfchen;
> ii. einer Geschwindigkeit der Öltröpfchen;
> iii. einer Größe der Öltröpfchen
> iv. einer mittleren Dicke in allen Richtungen eines Ölfilms auf einer Innenwand einer Kältemittelzuleitung oder Kältemittelausleitung des Kompressors;
> v. einer Geschwindigkeit des Ölfilms auf der Innenwand der Kältemittelzuleitung oder Kältemittelausleitung des Kompressors, und
> vi. einer Position der Öltröpfchen in der Kältemittelzuleitung oder Kältemittelausleitung.

In einer Ausführungsform des Verfahrens werden die Messungen auf der Saugseite des Kondensators am Eingang des Kompressors durchgeführt. In einer anderen Ausführungsform werden die Messungen auf der Hochdruckseite des Kompressors unmittelbar nach dem Kompressor und vor Kondensatoreintritt durchgeführt, d.h. der Messbereich liegt zwischen Kompressoraustritt und Kondensatoreintritt. In diesem Bereich ist das Kältemittelgemisch noch zweiphasig, da das gasförmige Kältemittel noch nicht kondensiert wurde.

Erfindungsgemäß wird aus den ermittelten Parametern die Ölmassenflussrate berechnet.

Die Ölzirkulationsrate OCR entspricht dem Massenfluss des Öls im Kältekreis. Im Zweiphasengebiet verteilt sich der Massenfluss auf einen Ölfilm an der Innenwand der Kältemittelleitungen des Kältekreises und über den Querschnitt der Leitung verteilte Öltröpfchen.

Der Anteil des Ölfilms am Massenfluss lässt sich berechnen gemäß

$$OCR_{Film} = \frac{\dot{m}_{Ölfilm}}{\dot{m}_{Öl} + \dot{m}_{KM}} = \frac{\rho_{Öl}\pi\left(D - \bar{\delta}\right)\bar{\delta}\bar{u}_{Film}}{\dot{m}_{Öl} + \dot{m}_{KM}}$$

worin

| | |
|---|---|
| D | den Innendurchmesser der Kältemittelleitung, |
| $\bar{\delta}$ | die mittlere Dicke des Ölfilms in allen Richtungen, |
| $\rho_{Öl}$ | die Dichte des Öls, |
| $\bar{u}_{Film}$ | die mittlere Geschwindigkeit des Ölfilms, |
| $\dot{m}_{Öl}$ | die Massenflussrate des Öls, |
| $\dot{m}_{KM}$ | die Massenflussrate des Kältemittels |

bedeuten.

Der Anteil der Öltröpfchen am Massenfluss lässt sich berechnen gemäß

$$OCR_{Tr} = \frac{\dot{m}_{Tr}}{\dot{m}_{Öl} + \dot{m}_{KM}} = \frac{\pi^2 \rho_{Öl} D^2 \sum(d^3 u_{Tr})}{24(\dot{m}_{Öl} + \dot{m}_{KM})A_{Video}D_f}$$

worin

| | |
|---|---|
| D | den Innendurchmesser der Kältemittelleitung, |
| $\rho_{Öl}$ | die Dichte des Öls, |
| d | den Äquivalentdurchmesser eines Öltröpfchens, |
| $u_{Tr}$ | die Geschwindigkeit des Öltröpfchens, |
| $\dot{m}_{Öl}$ | die Massenflussrate des Öls, |
| $\dot{m}_{KM}$ | die Massenflussrate des Kältemittels, |
| $A_{Video}$ | die von der Videokamera erfasste Fläche; |
| $D_f$ | die Tiefenschärfe der Videokamera |

bedeuten.

In einer Ausführungsform des Verfahrens werden die Parameter zeitaufgelöst und ortsaufgelöst gemessen. In einer weiteren Ausführungsform des Verfahrens beträgt die Zeitauflösung der Messungen 60 Hz.

In einer Ausführungsform des Verfahrens wird die Geschwindigkeit eines Öltröpfchens über die Exzentrizität des Öltröpfchens bestimmt gemäß

$$v = \frac{D}{t} = \frac{e - f}{t}$$

worin

| | |
|---|---|
| e | die Hauptachse der Ellipse |
| f | die Nebenachse der Ellipse |
| D | die Differenz e-f |
| t | die Belichtungszeit |
| v | die Geschwindigkeit der Öltröpfchen (D/t) |

bedeuten.

In einer Ausführungsform des Verfahrens wird die Geschwindigkeit des Ölfilms auf der Innenwand der Kältemittelzuleitung oder Kältemittelausleitung des Kompressors aus der Geschwindigkeit von Öltröpfchen in unmittelbarer Nähe des Ölfilms bestimmt.

In einer Ausführungsform des Verfahrens wird die Fläche des Ölfilms auf der Innenwand der Kältemittelzuleitung oder Kältemittelausleitung des Kompressors über Lichtreflexion gemessen.

Gegenstand der Erfindung ist auch eine Vorrichtung zur Ermittlung einer Ölmassenflussrate in einem Kältekreis, beispielsweise einem Kältekreis eines Kraftfahrzeugs, in einem Zweiphasengebiet eines in dem Kältekreis zirkulierenden ölhaltigen Kältemittels. Die Vorrichtung dient zur Durchführung des erfindungsgemäßen Verfahrens.

Die erfindungsgemäße Vorrichtung umfasst

a) mindestens einen durchsichtigen Bereich in einer Kältemittelzuleitung oder -ausleitung eines Kompressors des Kältekreises,

b) mindestens zwei für Pulsbetrieb eingerichtete Laserdioden mit einer Zylinderlinse zur Erzeugung eines gepulsten Lichtblattes,

wobei mindestens eine erste der mindestens zwei Laserdioden dafür eingerichtet ist, ein Lichtblatt quer zur Hauptströmungsrichtung des ölhaltigen Kältemittels zu erzeugen,
und mindestens eine zweite der mindestens zwei Laserdioden dafür eingerichtet ist, ein Lichtblatt parallel zur Hauptströmungsrichtung des ölhaltigen Kältemittels zu erzeugen;

c) mindestens eine Videokamera zur Erfassung eines Ölfilms auf einer Innenwand der Kältemittelzuleitung bzw -ausleitung, deren optische Achse die Ebene des Lichtblatts quer zur Hauptströmungsrichtung des ölhaltigen Kältemittels schräg schneidet;
d) mindestens eine Videokamera zur Erfassung von Öltröpfchen in der Kältemittelzuleitung bzw. -ausleitung, deren optische Achse senkrecht zur Ebene des Lichtblatts parallel zur Hauptströmungsrichtung des ölhaltigen Kältemittels verläuft.

In einer Ausführungsform der Vorrichtung ist der durchsichtige Bereich in der Kältemittelzuleitung bzw. -ausleitung ein Sichtfenster bzw. ein Schauglas. In einer weiteren Ausführungsform erstreckt sich der durchsichtige Bereich über eine Länge von 5 bis 15 cm der Kältemittelzuleitung bzw. -ausleitung, beispielsweise über eine Länge von 10 cm. In einer Ausführungsform ist der durchsichtige Bereich auf der Saugseite des Kompressors am Eintritt der Kältemittelzuleitung in den Kompressor angeordnet oder auf der Hochdruckseite des Kompressors am Austritt der Kältemittelleitung aus dem Kompressor (vor Kondensatoreintritt).

Die erfindungsgemäße Vorrichtung umfasst mindestens zwei für Pulsbetrieb eingerichtete Laserdioden und jeweils eine Zylinderlinse zur Erzeugung eines gepulsten Lichtblattes. Dies ermöglicht eine Messung der Parameter mittels Laserlichtschnitt und Stroboskopie. Die Zylinderlinsen sind notwendig, um ein Lichtblatt zu erzeugen.

Mindestens eine erste der mindestens zwei Laserdioden ist dafür eingerichtet, ein Lichtblatt quer zur Hauptströmungsrichtung des ölhaltigen Kältemittels zu erzeugen. Das Laserlicht des Lichtblattes wird von dem Ölfilm an der Innenwand der Kältemittelzuleitung bzw. -ausleitung reflektiert und erlaubt die Messung der Dicke, der Fläche und der Geschwindigkeit des Wandfilms.

Mindestens eine zweite der mindestens zwei Laserdioden ist dafür eingerichtet, ein Lichtblatt parallel zur Hauptströmungsrichtung des ölhaltigen Kältemittels zu erzeugen. Das Laserlicht des Lichtblattes wird von den Öltröpfchen in der Kältemittelzuleitung bzw. -ausleitung reflektiert und erlaubt die Messung der Anzahl, der Größe und der Geschwindigkeit der Öltröpfchen.

In einer Ausführungsform der Vorrichtung beträgt die Pulsdauer des Lichtblattes im Bereich von 1 $\mu$s bis 10.000 $\mu$s, insbesondere von 10 $\mu$s bis 1.000 $\mu$s. Beispielsweise kann zur Erfassung schneller Teilchen eine Pulsdauer von 10 $\mu$s eingesetzt werden, zur Erfassung langsamer Teilchen eine Pulsdauer von 1.000 $\mu$s.

Die Reflexion der Öltröpfchen in der Kältemittelzuleitung bzw. die Reflexion des Ölfilms an der Innenwand der Kältemittelzuleitung bzw. -ausleitung wird mit einer handelsüblichen Videokamera erfasst.

Die erfindungsgemäße Vorrichtung umfasst mindestens eine Videokamera zur Erfassung eines Ölfilms auf einer Innenwand der Kältemittelzuleitung bzw. -ausleitung, deren optische Achse die Ebene des Lichtblatts quer zur Hauptströmungsrichtung des ölhaltigen Kältemittels schräg schneidet. Der Winkel zwischen der optischen Achse der Kamera und der Ebene des Lichtblattes ist für die Messung notwendig. Der Winkel sollte so gering wie möglich sein und muss für die Ermittlung der Wandfilmfläche berücksichtigt werden. Der Winkel ist von den baulichen Gegebenheiten abhängig. In einer Ausführungsform liegt der Winkel im Bereich von 30°, beispielsweise im Bereich von 20 bis 45°.

Die erfindungsgemäße Vorrichtung umfasst auch mindestens eine Videokamera zur Erfassung von Öltröpfchen in der Kältemittelzuleitung bzw. -ausleitung, deren optische Achse senkrecht zur Ebene des Lichtblatts parallel zur Hauptströmungsrichtung des ölhaltigen Kältemittels verläuft. Die mindestens eine Kamera erfasst die Reflektion des Laserlichts an den Öltröpfchen in der Kältemittelzuleitung bzw.-ausleitung.

In einer Ausführungsform wird das Messsystem zur Erhöhung des Kontrasts der mit Stroboskopie erzeugten Bilder abgedunkelt.

In einer Ausführungsform der Vorrichtung die mindestens eine Videokamera eine Zeitauflösung von 60 Bildern pro Sekunde (60 fps) auf. In einer weiteren Ausführungsform weist die Videokamera eine Auflösung von 4K@60Hz auf.

Ein Beispiel für geeignete Videokameras sind die Action-Camcorder der GoPro Inc., San Mateo, CA, USA. Die Kameras der Modellreihe HERO können Fotos und Videos aufzeichnen und zeichnen sich durch einen sehr weiten Aufnahmewinkel (170°) aus.

In einer Ausführungsform der Vorrichtung werden Kameras vom Typ HERO7 eingesetzt. Diese weisen eine Auflösung von 4K auf und lassen sich in folgenden Videomodi betreiben: 1440p60, 1080p60, 4K30, 1440p60, 1080p60, 4K60, 2.7K120, 1440p120, 1080p240. In einer Ausführungsform der erfindungsgemäßen Vorrichtung werden die Kameras im Modus 4K60 betrieben.

In einer Ausführungsform umfasst die erfindungsgemäße Vorrichtung eine Recheneinheit mit Software, welche die durch die Kameras erzeugten Bilder automatisch auswertet und die OCR berechnet.

Die erfindungsgemäße Messmethode ermöglicht es, ohne Eingriff in das System gleich zwei Strömungsformen des Öls (Tröpfchen und Wandfilm) optisch zu bestimmen. Durch Bestimmung der Menge des Öls (Anzahl der Tröpfchen sowie Wandfilmdicke) und der jeweiligen Geschwindigkeit (Exzentrizität der Tröpfchen sowie Geschwindigkeit der wandfilmnahen Tröpfchen) kann die OCR im Bereich am Kompressoreintritt oder auch am Kompressoraustritt (vor Kondensatoreintritt) berechnet werden.

Weitere Vorteile und Ausgestaltungen der Erfindung ergeben sich aus der Beschreibung und den beiliegenden Zeichnungen.

Es versteht sich, dass die vor anstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigt:

Figur 1    schematisch eine Ausführungsform einer erfindungsgemäßen Messvorrichtung;

Figur 2    schematisch einen Querschnitt durch eine Kältemittelleitung mit einem ölhaltigen Kältemittel im Zweiphasengebiet;

Figur 3    mit einer Ausführungsform des erfindungsgemäßen Verfahrens erhaltene Messergebnisse zu Öltröpfchen;

Figur 4    mit einer Ausführungsform des erfindungsgemäßen Verfahrens erhaltene Messergebnisse zu Ölfilmen bei unterschiedlichen Kompressorleistungen.

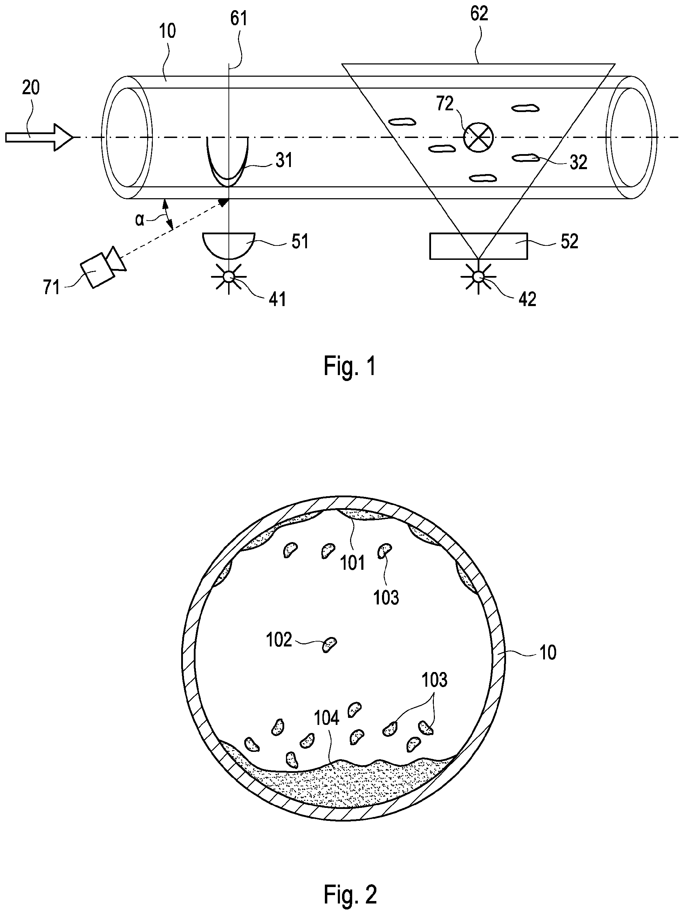

Figur 1 zeigt schematisch eine Ausführungsform einer erfindungsgemäßen Messvorrichtung. Gezeigt ist eine Kältemittelleitung 10, durch die ein Massenstrom 20 eines ölhaltigen Kältemittels fließt. Im zweiphasigen Kältemittel-Öl-Gemisch des ölhaltigen Kältemittels bildet das Öl einen Wandfilm 31 und über den Querschnitt der Leitung 10 verteilte Öltröpfchen 32.

Eine erste gepulste Laserdiode 41 erzeugt über eine erste Zylinderlinse 51 ein erstes Lichtblatt 61, das quer zur Hauptströmungsrichtung des Massenstroms 20, d.h. senkrecht zur Längsachse der Leitung 10 verläuft. Eine erste Videokamera 71 blickt schräg auf die Ebene des ersten Lichtblattes 61, wobei die optische Achse der ersten Videokamera 71 mit der Längsachse der Leitung 10 einen Winkel $\alpha$ einschließt. Die erste Videokamera 71 beobachtet die Reflexion des Laserlichts am Ölfilm 31 auf der Innenwand der Leitung 10.

Eine zweite gepulste Laserdiode 42 erzeugt über eine zweite Zylinderlinse 52 ein zweites Lichtblatt 62, das parallel zur Hauptströmungsrichtung des Massenstroms 20, d.h. parallel zur Längsachse der Leitung 10 verläuft. Eine zweite Videokamera 72 blickt senkrecht auf die Ebene des zweiten Lichtblattes 62, wobei die optische Achse der zweiten Videokamera 71 senkrecht zur Längsachse der Leitung 10 verläuft. Die zweite Videokamera 72 beobachtet die Reflexion des Laserlichts an den Öltröpfchen 32 in der Leitung 10.

Die Leitung 10 ist durchsichtig in den Bereichen des eintretenden Laserlichts und den Beobachtungsbereichen der Videokameras 71 und 72. In einer Ausführungsform wird die Messvorrichtung abgedunkelt, um den Kontrast der von den Videokameras 71 und 72 aufgenommenen Bilder zu erhöhen.

Figur 2 zeigt schematisch einen Querschnitt durch eine Kältemittelleitung 10 mit einem ölhaltigen Kältemittel im Zweiphasengebiet.

Das Öl liegt in der Leitung 10 in unterschiedlichen Strömungsformen vor. Ein dünner Wandfilm 101 befindet sich im oberen Bereich der Innenwand der Leitung 10; Öltröpfchen 102 sind über den Querschnitt der Leitung 10 verteilt, ein dicker Wandfilm 104 mit Strukturen, der bis zu 2mm dick sein kann, befindet sich am Boden der Innenwand der Leitung 10. Aus dem Wandfilm 104 werden Öltröpfchen 103 herausgerissen. Mit dem erfindungsgemäßen Verfahren werden gleichzeitig alle Strömungsformen des Öls gemessen. Es werden die Fläche und Dicke der Wandfilme 101 und 104 gemessen. Die Geschwindigkeit der wandnahen Öltröpfchen 103 dient zur Bestimmung der Strömungsgeschwindigkeit des Ölfilms 101,104. Die Anzahl, die Größe (der Äquivalenzdurchmesser), die Geschwindigkeit der Öltröpfchen 102, 103 und die Position der Öltröpfchen 102, 103 werden ebenfalls ermittelt. Die Geschwindigkeit der Öltröpfchen 102, 103 wird aus ihrer Exzentrizität ermittelt. Je höher die Geschwindigkeit, desto langgestreckter sind die Tröpfchen.

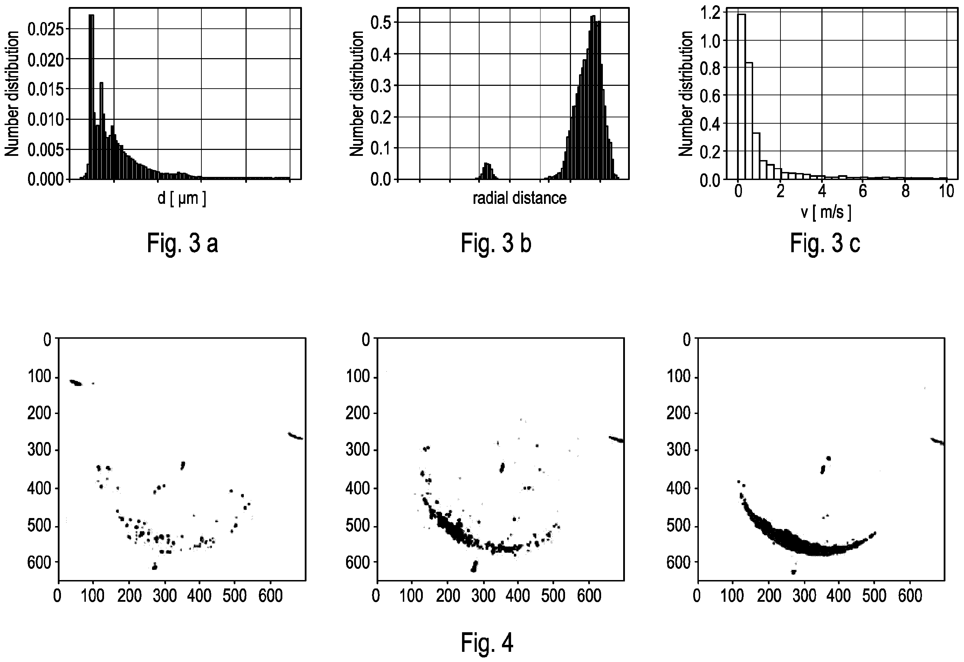

Figur 3 zeigt mit einer Ausführungsform des erfindungsgemäßen Verfahrens erhaltene Messergebnisse zu Öltröpfchen.

Gezeigt sind die ermittelten Verteilungen für den Äquivalenzdurchmesser d (die Größe) der Öltröpfchen im linken Diagramm 3a, die Position der Öltröpfchen im mittleren Diagramm 3b, und die Geschwindigkeit der Öltröpfchen im rechten Diagramm 3c.

In Diagramm 3b ist auf der x-Achse die radiale Entfernung (Abstand vom Kreismittelpunkt) aufgetragen. Links ist die Oberseite der Kältemittelleitung, rechts ist die Unterseite der Kältemittelleitung. Die x-Achse im Diagramm 3b stellt die senkrecht durch den Kreismittelpunkt verlaufende Achse zwischen Oberseite und Unterseite der Kältemittelleitung dar. Der Nullpunkt ist in der Mitte der x-Achse; Entfernungen in Richtung Oberseite haben ein negatives Vorzeichen, Entfernungen in Richtung Unterseite ein positives Vorzeichen.

In Diagramm 3c ist auf der x-Achse die Geschwindigkeit der Öltröpfchen in m/s aufgetragen.

Figur 4 zeigt mit einer Ausführungsform des erfindungsgemäßen Verfahrens erhaltene Messergebnisse zu Ölfilmen bei unterschiedlichen KompressorLeistungen. Die Kompressorleistung ist im linken Diagramm am niedrigsten und im rechten Diagramm am höchsten.

Dargestellt ist jeweils die Ölverteilung über einen Querschnitt einer Kältemittelleitung. Der Ölfilm ist in den Diagrammen durch dunkle Bereiche repräsentiert.

Bezugszeichenliste

| | |
|---|---|
| 10 | Kältemittelleitung |
| 20 | Massenstrom ölhaltiges Kältemittel |
| 31 | Ölfilm |
| 32 | Öltröpfchen |
| 41 | erste Laserdiode |
| 42 | zweite Laserdiode |
| 51 | erste Zylinderlinse |
| 52 | zweite Zylinderlinse |
| 61 | erstes Laserlichtblatt |
| 62 | zweites Laserlichtblatt |
| 71 | erste Videokamera |
| 72 | zweite Videokamera |

**Patentansprüche**

1. Vorrichtung zur Ermittlung einer Ölmassenflussrate in einem Kältekreis in einem zweiphasigen Kältemittel-Öl-Gemisch eines in dem Kältekreis zirkulierenden ölhaltigen Kältemittels, umfassend

   a) mindestens einen durchsichtigen Bereich in einer Kältemittelzuleitung (10) oder einer Kältemittelausleitung (10) eines Kompressors des Kältekreises,
   b) mindestens zwei für Pulsbetrieb eingerichtete Laserdioden (41, 42) mit einer Zylinderlinse (51, 52) zur Erzeugung eines gepulsten Lichtblattes (61, 62),

   wobei mindestens eine erste (41) der mindestens zwei Laserdioden (41, 42) dafür eingerichtet ist, ein Lichtblatt (61) quer zur Hauptströmungsrichtung des ölhaltigen Kältemittels zu erzeugen,
   und mindestens eine zweite (42) der mindestens zwei Laserdioden (41, 42) dafür eingerichtet ist, ein Lichtblatt (62) parallel zur Hauptströmungsrichtung des ölhaltigen Kältemittels zu erzeugen;

   c) mindestens eine Videokamera (71) zur Erfassung eines Ölfilms (31) auf einer Innenwand der Kältemittelzuleitung (10) oder der Kältemittelausleitung (10), deren optische Achse die Ebene des Lichtblatts (61) quer zur Hauptströmungsrichtung des ölhaltigen Kältemittels schräg schneidet;
   d) mindestens eine Videokamera (72) zur Erfassung von Öltröpfchen (32) in der Kältemittelzuleitung (10) oder der Kältemittelausleitung (10), deren optische Achse senkrecht zur Ebene des Lichtblatts (62) parallel zur Hauptströmungsrichtung des ölhaltigen Kältemittels verläuft.

2. Vorrichtung nach Anspruch 1, bei der die Pulsdauer des Lichtblattes (61, 62) im Bereich von 1 μs bis 10.000 μs beträgt.

3. Vorrichtung nach Anspruch 2, bei der die Pulsdauer des Lichtblattes (61, 62) im Bereich von 10 μs bis 1.000 μs beträgt.

4. Vorrichtung nach einem der Ansprüche 1 bis 3, bei der die mindestens eine Videokamera (71, 72) eine Zeitauflösung von 60 fps aufweist.

5. Verfahren zur Ermittlung einer Ölmassenflussrate in einem Kältekreis mit Hilfe einer Vorrichtung nach einem der Ansprüche 1 bis 4,, umfassend Messungen von Parametern in einem Zweiphasengebiet eines in dem Kältekreis zirkulierenden ölhaltigen Kältemittels am Eingang oder am Ausgang eines Kompressors des Kältekreises und Berechnung der Ölmassenflussrate aus den ermittelten Parametern, wobei die Parameter

> i. eine Anzahl von Öltröpfchen;
> ii. eine Geschwindigkeit der Öltröpfchen;
> iii. eine Größe der Öltröpfchen;
> iv. eine mittlere Dicke in allen Richtungen eines Ölfilms auf einer Innenwand einer Kältemittelzuleitung oder einer Kältemittelausleitung des Kompressors;
> v. eine Geschwindigkeit des Ölfilms auf der Innenwand der Kältemittelzuleitung oder Kältemittelausleitung des Kompressors, und
> vi. eine Position der Öltröpfchen in der Kältemittelzuleitung oder Kältemittelausleitung sind.

6. Verfahren nach Anspruch 5, worin die Parameter zeitaufgelöst und ortsaufgelöst gemessen werden.

7. Verfahren nach Anspruch 6, worin die Zeitauflösung der Messungen 60 Hz beträgt.

8. Verfahren nach einem der Ansprüche 5 bis 7, worin die Geschwindigkeit eines Öltröpfchens über die Exzentrizität des Öltröpfchens bestimmt wird.

9. Verfahren nach einem der Ansprüche 5 bis 8, worin die Geschwindigkeit des Ölfilms auf der Innenwand der Kältemittelzuleitung des Kompressors aus der Geschwindigkeit von Öltröpfchen in unmittelbarer Nähe des Ölfilms bestimmt wird.

10. Verfahren nach einem der Ansprüche 5 bis 9, worin die mittlere Dicke in allen Richtungen des Ölfilms auf der Innenwand der Kältemittelzuleitung oder Kältemittelausleitung des Kompressors über Lichtreflexion gemessen wird.

**Claims**

1. An apparatus for determining an oil mass flow rate in a cooling circuit in a two-phase refrigerant-oil mixture of an oil-containing refrigerant circulating in the cooling circuit, comprising

> a) at least one transparent region in a refrigerant supply line (10) or a refrigerant discharge line (10) of a compressor of the cooling circuit,
> b) at least two laser diodes (41, 42) configured for pulsed operation having a cylindrical lens (51, 52) for generating a pulsed light sheet (61, 62),
>
> > wherein at least a first one (41) of said at least two laser diodes (41, 42) is configured to generate a light sheet (61) transverse to the main flow direction of the oil-containing refrigerant,
> > and at least a second one (41) of said at least two laser diodes (41, 42) is configured to generate a light sheet (62) parallel to the main flow direction of the oil-containing refrigerant;
>
> c) at least one video camera (71) for capturing an oil film (31) on an inner wall of the refrigerant supply line (10) or the refrigerant discharge line (10), the optical axis of which obliquely intersects the plane of the light sheet (61) transverse to the main flow direction of the oil-containing refrigerant;
> d) at least one video camera (72) for capturing oil droplets (32) in the refrigerant supply line (10) or the refrigerant discharge line (10), the optical axis of which runs perpendicular to the plane of the light sheet (62) parallel to the main flow direction of the oil-containing refrigerant.

2. The apparatus according to claim 1, wherein the pulse duration of the light sheet (61,62) is in the range of 1 μs to

10,000 μs.

3.  The apparatus according to claim 2, wherein the pulse duration of the light sheet (61,62) is in the range of 10 μs to 1,000 μs.

4.  The apparatus according to any of claims 1 to 3, wherein the at least one video camera (71,72) has a time resolution of 60 fps.

5.  A method for determining an oil mass flow rate in a cooling circuit by means of an apparatus according to any of claims 1 to 4, comprising measurements of parameters in a two-phase region of an oil-containing refrigerant circulating in the cooling circuit at the inlet or at the outlet of a compressor of the cooling circuit and calculating the oil mass flow rate from the determined parameters,
    wherein the parameters are

    i. a number of oil droplets;
    ii. a speed of the oil droplets;
    iii. a size of the oil droplets;
    iv. an average thickness in all directions of an oil film on an inner wall of a refrigerant supply line or a refrigerant discharge line of the compressor;
    v. a speed of the oil film on the inner wall of the refrigerant supply line or refrigerant discharge line of the compressor,
    and
    vi. a position of oil droplets in the refrigerant supply line or refrigerant discharge line.

6.  The method according to claim 5, wherein the parameters are measured in a time-resolved and spatially resolved manner.

7.  The method according to claim 6, wherein the time resolution of the measurements is 60 Hz.

8.  The method according to any of claims 5 to 7, wherein the speed of an oil droplet is determined through the eccentricity of the oil droplet.

9.  The method according to any of claims 5 to 8, wherein the speed of the oil film on the inner wall of the refrigerant supply line of the compressor is determined from the speed of oil droplets in the immediate vicinity of the oil film.

10. The method according to any of claims 5 to 9, wherein the average thickness in all directions of the oil film on the inner wall of the refrigerant supply line or refrigerant discharge line of the compressor is measured through light reflection.

**Revendications**

1.  Dispositif destiné à déterminer un débit massique d'huile dans un circuit de réfrigération dans un mélange diphasique de réfrigérant et d'huile d'un réfrigérant à base d'huile circulant dans le circuit de réfrigération, comprenant

    a) au moins une zone transparente dans une conduite d'alimentation en réfrigérant (10) ou une conduite de sortie de réfrigérant (10) d'un compresseur du circuit de réfrigération,
    b) au moins deux diodes laser (41, 42) conçues pour un fonctionnement par impulsions et dotées d'une lentille cylindrique (51, 52) pour produire une feuille de lumière (61, 62) pulsée,

    au moins une première diode laser (41) parmi au moins deux diodes laser (41, 42) étant conçue pour produire une feuille de lumière (61) transversalement à la direction principale d'écoulement du réfrigérant à base d'huile,
    et au moins une deuxième diode laser (42) parmi au moins deux diodes laser (41, 42) étant conçue pour produire une feuille de lumière (62) parallèle à la direction principale d'écoulement du réfrigérant à base d'huile ;

    c) au moins une caméra vidéo (71) pour détecter un film d'huile (31) sur une paroi intérieure de la conduite d'alimentation en réfrigérant (10) ou de la conduite de sortie de réfrigérant (10), dont l'axe optique coupe obliquement le plan de la feuille de lumière (61) transversalement à la direction d'écoulement principale du réfrigérant à base d'huile ;

d) au moins une caméra vidéo (72) pour détecter des gouttelettes d'huile (32) dans la conduite d'alimentation en réfrigérant (10) ou dans la conduite de sortie de réfrigérant (10), dont l'axe optique est perpendiculaire au plan de la feuille de lumière (62) et parallèle à la direction principale d'écoulement du réfrigérant à base d'huile.

2.  Dispositif selon la revendication 1, dans lequel la durée d'impulsion de la feuille de lumière (61, 62) est comprise entre 1 $\mu$s et 10 000 $\mu$s.

3.  Dispositif selon la revendication 2, dans lequel la durée d'impulsion de la feuille de lumière (61, 62) est comprise entre 10 $\mu$s et 1 000 $\mu$s.

4.  Dispositif selon l'une des revendications 1 à 3, dans lequel ladite au moins une caméra vidéo (71, 72) présente une résolution temporelle de 60 fps.

5.  Procédé de détermination d'un débit massique d'huile dans un circuit de réfrigération à l'aide d'un dispositif selon l'une des revendications 1 à 4, comprenant des mesures de paramètres dans une zone diphasique d'un réfrigérant à base d'huile circulant dans le circuit de réfrigération, à l'entrée ou à la sortie d'un compresseur du circuit de réfrigération, et le calcul du débit massique d'huile à partir des paramètres déterminés,
    les paramètres étant

    i. un nombre de gouttelettes d'huile ;
    ii. une vitesse des gouttelettes d'huile ;
    iii. une taille des gouttelettes d'huile ;
    iv. une épaisseur moyenne dans toutes les directions d'un film d'huile sur une paroi intérieure d'une conduite d'alimentation en réfrigérant ou d'une conduite de sortie de réfrigérant du compresseur ;
    v. une vitesse du film d'huile sur la paroi intérieure de la conduite d'alimentation en réfrigérant ou de la conduite de sortie de réfrigérant du compresseur,
    et
    vi. une position des gouttelettes d'huile dans la conduite d'alimentation en réfrigérant ou la conduite de sortie de réfrigérant.

6.  Procédé selon la revendication 5, dans lequel les paramètres sont mesurés avec une résolution temporelle et une résolution spatiale.

7.  Procédé selon la revendication 6, dans lequel la résolution temporelle des mesures est de 60 Hz.

8.  Procédé selon l'une des revendications 5 à 7, dans lequel la vitesse d'une gouttelette d'huile est déterminée par l'excentricité de la gouttelette d'huile.

9.  Procédé selon l'une des revendications 5 à 8, dans lequel la vitesse du film d'huile sur la paroi intérieure de la conduite d'alimentation en réfrigérant du compresseur est déterminée à partir de la vitesse des gouttelettes d'huile à proximité immédiate du film d'huile.

10. Procédé selon l'une des revendications 5 à 9, dans lequel l'épaisseur moyenne dans toutes les directions du film d'huile sur la paroi intérieure de la conduite d'alimentation en réfrigérant ou de la conduite de sortie de réfrigérant du compresseur est mesurée par réflexion de la lumière.

Fig. 1

Fig. 2

Fig. 3 a

Fig. 3 b

Fig. 3 c

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006000690 A1
- JP 09264769 A
- JP 2009133524 A
- DE 102016002113 A1
- US 2018088054 A1
- CN 103424406 A